# EUROPÄISCHE PATENTSCHRIFT

(11) **EP 0 471 661 B1**
(45) Veröffentlichungstag und Bekanntmachung des Hinweises auf die Patenterteilung: **01.02.1995**
(21) Anmeldenummer: 91890116.6
(22) Anmeldetag: 29.05.1991
(51) Int. Cl.: H01M 10/14

(54) **Vorrichtung zum Zusammensetzen von Platten und Separatoren zu Plattensätzen für Akkumulatoren**
Apparatus for assembling of plates and separators into plate groups for storage batteries
Dispositif pour l'assemblage de plaques et de séparateurs en blocs de plaques pour accumulateurs

(30) Priorität: 13.08.1990 AT 1686/90
(43) Veröffentlichungstag der Anmeldung: 19.02.1992
(73) Patentinhaber: ELBAK Batteriewerke Gesellschaft m.b.H., A-8055 Graz-Puntigam Steiermark (AT)
(72) Erfinder: Puhm, Helmut, A-8010 Graz (AT); Kirstein, Wilhelm H., A-1190 Wien (AT); Schwetz, Anton, A-8273 Ebersdorf (AT)
(74) Vertreter: Beer, Manfred, Dipl.-Ing.

(56) Entgegenhaltungen:
- DE-C- 935 574
- DE-C- 1 160 910
- DE-C- 2 207 488

## Beschreibung

Die Erfindung betrifft eine Vorrichtung zum Zusammensetzen von Platten und Separatoren zu Plattensätzen für Akkumulatoren mit den Merkmalen des Oberbegriffes von Anspruch 1.

Derartige Vorrichtungen sind bekannt. In diesem Zusammenhang wird beispielsweise auf die DE-C-1 160 910 und die DE-C-935 374 verwiesen.

Bei der Herstellung von Traktions-, Industrie- und Stationärbatterien werden wegen der Größe und der schlechten Handhabbarkeit der Bleiplatten und der Separatoren die Plattenblöcke von Hand aus zusammengelegt. Dabei wird in der Regel so vorgegangen, daß man die Bleiplatten und die Separatoren in der richtigen Reihenfolge in einer Kassette sammelt und dann einer Schweißvorrichtung zuführt, in der die positiven Platten und die negativen Platten verbunden werden. Manchmal werden die zusammengelegten Plattenblöcke auch einer Angußmaschine zugeführt, in der die Verbindungen der positiven bzw. negativen Platten hergestellt werden. Bei der Handhabung der Bleiplatten von Hand aus besteht die Gefahr, daß die Bedienungsperson trotz Absaugvorrichtungen gesundheitsgefährdendem Bleistaub ausgesetzt wird.

Bei den bekannten Vorrichtungen zum Stapeln von (Blei-) Platten und Separatoren für Akkumulatoren werden die Platten für gewöhnlich von unten aus Stapeln positiver bzw. negativer Platten entnommen und in der gewünschten bzw. benötigten Reihenfolge und in der erforderlichen Stückzahl zu Plattenblöcken übereinandergestapelt. Insbesondere bei der Herstellung von Traktions-, Industrie- und Stationärbatterien ist die Entnahme der Bleiplatten aus den bekannten Magazinen wegen der Größe der Platten nur schwer möglich. Es kommt daher häufig zu Störungen des Arbeitsablaufes, beispielsweise wenn sich eine positive oder negative Platte bei der Entnahme aus dem Plattenstapel verbiegt.

Der Erfindung liegt die Aufgabe zugrunde, eine Vorrichtung der im Oberbegriff von Anspruch 1 genannten Gattung derart weiterzubilden, daß das Bilden von Plattenblöcken auch bei den für Traktions-, Industrie- und Stationärbatterien größeren Abmessungen der Bleiplatten und Separatoren problemlos möglich ist und die Plattenblöcke aus der gewünschten Anzahl von Platten und Separatoren sowie den erforderlichen Endplatten weitgehend oder vollständig automatisch hergestellt werden können.

Gelöst wird diese Aufgabe mit einer Vorrichtung mit den Merkmalen des kennzeichnenden Teils von Anspruch 1.

Vorteilhafte Weiterbildungen der erfindungsgemäßen Vorrichtung sind Gegenstand der Unteransprüche.

Bei der erfindungsgemäßen Vorrichtung (Stapelmaschine) werden die Plattenblöcke in der Weise gebildet, daß die Bleiplatten von den der Maschine zugeführten Bleiplattenstapeln, die beispielsweise auf Transportpaletten liegen, einzeln von oben entnommen und der Stapelmaschine zugeführt werden. Bei der erfindungsgemäßen Maschine sind für die Bleiplatten keine Magazine mehr erforderlich, die mit den schweren, großen Bleiplatten gefüllt werden müssen. Lediglich die Separatoren, die bevorzugt gestapelt in Magazinen aufgenommen sind, werden von unten aus den Magazinen entnommen.

Weitere Einzelheiten und Merkmale der erfindungsgemäßen Vorrichtung ergeben sich aus der nachstehenden Beschreibung eines Ausführungsbeispieles an Hand der Zeichnungen. Es zeigt:
Fig. 1 schematisch eine erfindungsgemäße Vorrichtung in Seitenansicht,
Fig. 2 eine Draufsicht auf die Vorrichtung aus Fig. 1,
Fig. 3 einen in der Vorrichtung von Fig. 1 und 2 gebildeten Plattenblock,

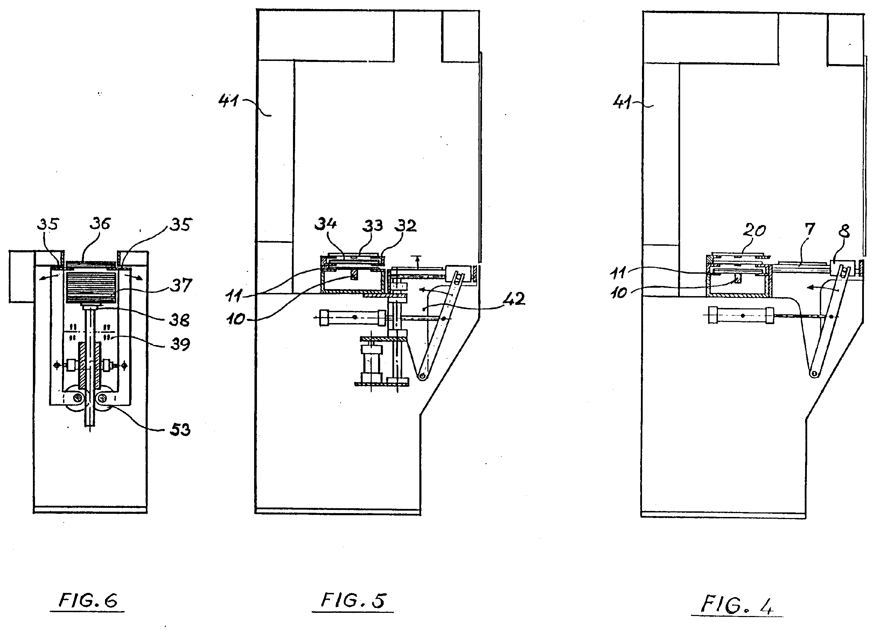

Fig. 4 einen Schnitt längs der Linie IV-IV in Fig. 2,
Fig. 5 einen Schnitt längs der Linie V-V in Fig. 2,
Fig. 6 einen Schnitt längs der Linie VI-VI in Fig. 2 und
Fig. 7 und Fig. 8 eine Umsetzvorrichtung für Platten aus Vorratsstapeln in die Vorrichtung.

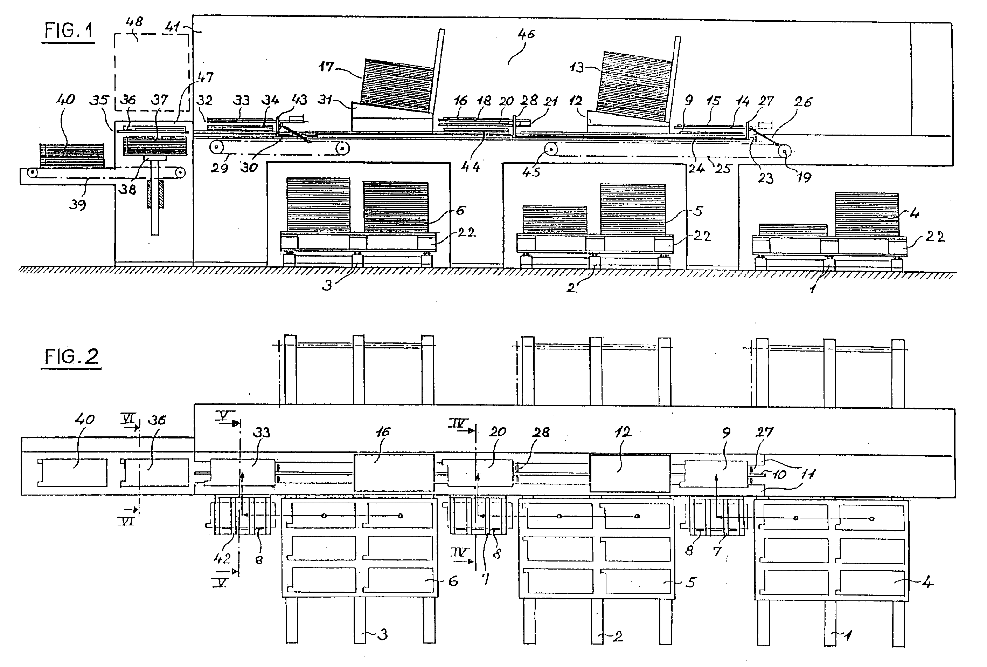

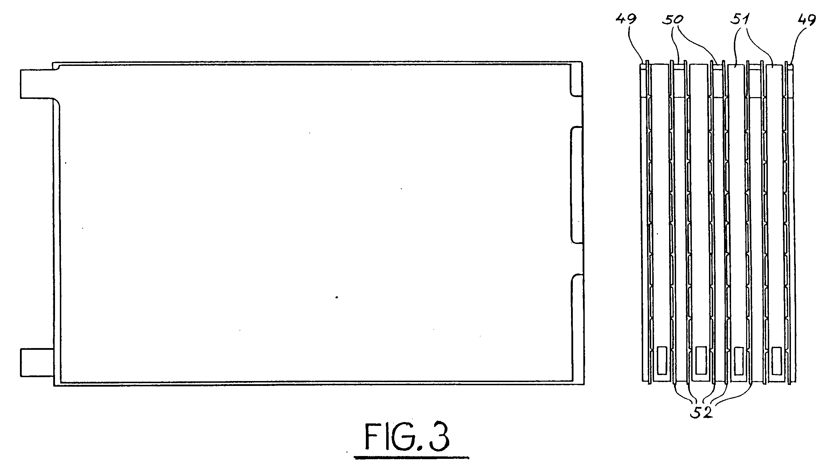

Ein Plattenblock 40, wie er in der erfindungsgemäßen Vorrichtung gestapelt werden kann, und der in Fig. 1 ganz links an der Abgabeseite der Vorrichtung gezeigt ist, besteht beispielsweise, wie in Fig. 3 gezeigt, aus vier positiven Platten 51, drei negativen Mittelplatten 50, zwei negativen Endplatten 49 und jeweils zwischen den Platten 49, 50 und 51 angeordneten Separatoren 52.

Mit der erfindungsgemäßen, in den Fig. 1 und 2 gezeigten Vorrichtung können derartige Plattenblöcke 40 mit der jeweils gewünschten Anzahl von negativen Mittelplatten 50 und positiven Platten 51 sowie dazwischen angeordneten Separatoren 52 und den dünneren, außenseitig angeordneten, negativen Endplatten 49 hergestellt werden.

Die erfindungsgemäße, in den Fig. 1 und 2 gezeigte Vorrichtung besitzt drei Palettenförderer 1, 2 und 3, auf welchen Paletten 22 mit darauf angeordneten Plattenstapeln 4, 5 bzw. 6 der Vorrichtung zugeführt werden können. Dabei ist der Palettenförderer 1 für Paletten 22, auf welchen Plattenstapel 4 mit negativen Mittelplatten 50, der Palettenförderer 2 für Paletten 22 mit darauf angeordneten Stapeln 5 aus positiven Platten 51 und der Palettenförderer 3 für Paletten 22 mit Plattenstapeln 6 aus negativen Endplatten 49 bestimmt. Die Palettenförderer 1, 2 und 3 werden so gesteuert, daß sie die Paletten 22 mit den darauf angeordneten Stapeln 4, 5 bzw. 6 bis zu Stellen fördern, in welchen Stapel 4, 5 bzw. 6 der Aufnahmestelle durch einen Greifer oder einen Saugheber 56 zugeordnet sind. Die Greifer bzw. Saugheber 56, die in Fig. 2 nur schematisch durch Pfeile angedeutet sind, entnehmen die jeweils oberste Platte 49, 50 bzw. 51 und legen sie auf den Palettenförderern 1, 2 bzw. 3 jeweils benachbart angeordnete Plattenroste 7 bzw. 42.

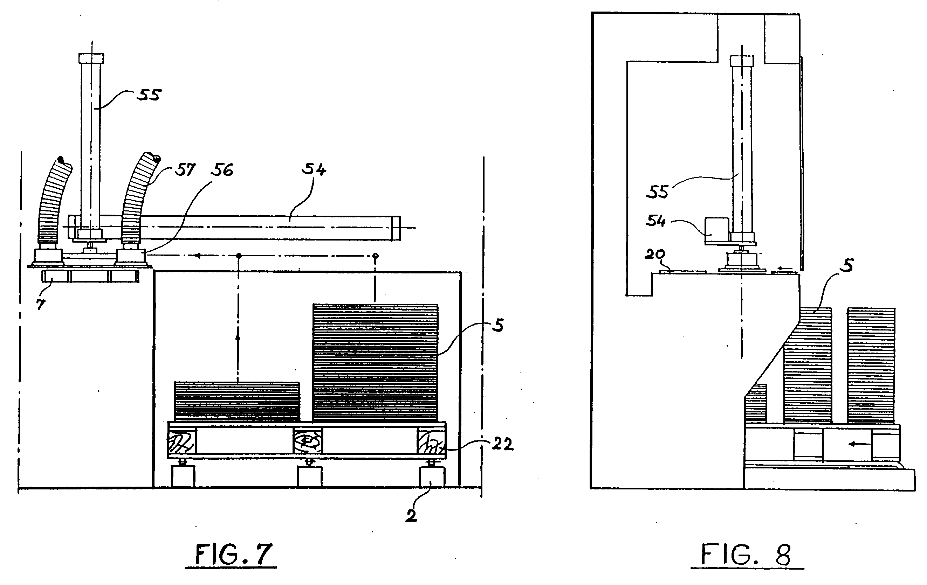

In einer Ausführungsform sind für das Umsetzen jeweils einer Platte 49, 50 oder 51 aus einem Plattenstapel 4, 5 bzw. 6 Saugheber 56 vorgesehen, die sowohl vertikal als auch horizontal beweglich sind. Die vertikalen und die horizontalen Bewegungen der Saugheber 56 (oder der Greifer) werden bevorzugt durch Pneumatikzylinder bewirkt, wovon je Saugheber 56 (bzw. Greifer) ein horizontal und ein vertikal wirkender Pneumatikzylinder vorgesehen sind. Das grundsätzliche Prinzip solcher Saugheber ist beispielsweise aus der AT-B-379 786 oder der DE-A-21 48 532 bekannt. Eine bevorzugte Ausführungsform für die Vorrichtungen zum Umsetzen von Platten 49, 50 bzw. 51 ist in den Fig. 7 und 8 am Beispiel der Umsetzvorrichtung für die positiven Platten 51 gezeigt. Bei dieser Vorrichtung werden die Saugköpfe des Saughebers 56 über Saugschläuche 57 von einer nicht gezeigten Unterdruckquelle wenigstens immer dann mit Unterdruck beaufschlagt, wenn eine Platte 51 aus dem Stapel 5 umzusetzen ist. Die Saugköpfe 56 sind durch einen lotrecht ausgerichteten, pneumatischen oder hydraulischen Zylinder 55 heb- und senkbar. Der Zylinder 55 und die an seiner Kolbenstange montierten Saugköpfe 56 sind mit Hilfe eines waagerecht ausgerichteten Zylinders 54 zwischen der dem jeweiligen Stapel 5 zugeordneten Aufnahmestellung und einer dem zugeordneten Ablagerost 7 bzw. 42 zugeordneten Ablagestellung horizontal verstellbar.

Die neben den Palettenförderern 1 und 2 vorgesehenen Plattenroste 7 sind in Höhenrichtung nicht veränderbar am Maschinengestell befestigt und besitzen eine Einschubvorrichtung 8, die beispielsweise durch einen Druckmittelzylinder, beispielsweise einen Pneumatikzylinder, betätigt wird. Die Platten 50 werden von dem neben dem Palettenförderer 1 angeordneten Plattenrost 7 auf horizontale Auflageleisten 10 und 11 geschoben, so daß sie die in Fig. 2 mit 9 bezeichnete Stellung einnehmen.

Vom Plattenrost 7, der neben dem Palettenförderer 2 angeordnet ist, werden die Platten 51 durch die Einschubvorrichtung 8 nicht auf die Auflageleisten 10 und 11, sondern auf die untere Etage eines Ablagerostes 21, die im Abstand über den Auflageleisten 10 und 11 angeordnet ist, geschoben und nehmen dort die in Fig. 2 mit "20" bezeichnete Stellung ein.

Der Plattenrost 42, der neben dem Palettenförderer 3, von dem Paletten 22 mit negativen Endplatten 49 zu Stapeln 6 gestapelt transportiert werden, angeordnet ist, ist in Höhenrichtung verstellbar, so daß negative Endplatten 49 von der Einschubvorrichtung 8 des Plattenrostes 42 entweder oberhalb oder unterhalb einer zugeführten Plattengruppe eingeschoben werden können.

Über der von den beiden seitlichen Auflageleisten 11 und der mittleren Auflageleiste 10 gebildeten Gleitbahn, die sich durch die gesamte Vorrichtung erstreckt, sind zwei Magazine vorgesehen, in welchen Stapel 13 bzw. 17 aus Separatoren aufgenommen sind. Unter jedem Stapel 13 bzw. 17 befindet sich eine Vorrichtung zum Vereinzeln von Separatoren 12 bzw. 31. Derartige Magazine sind in den verschiedensten Ausführungsformen bekannt, in welchem Zusammenhang auf die DE-A-23 08 946, die AT-B-352 198, der AT-B-352 197, die AT-B-241 565, die AT-B-329 124 und insbesondere die in der EP- Anmeldung 90 890 114.3 (= EP-A-0 397 640) beschriebene Entnahme- und Vereinzelungsvorrichtung verwiesen wird.

Die Konstruktion dieser Magazine mit den Stapeln 13 bzw. 17 aus Separatoren ist für die Erfindung nicht wesentlich. Es genügt, wenn diese in der Lage sind, einzelne Separatoren aus den Stapeln 13 und 17 jeweils im richtigen Zeitpunkt zu entnehmen und einzeln in die Vorrichtung zum Bilden von Plattenblöcken 40 abzugeben.

Unter den Auflageleisten 10 und 11 sind zwei im Querschnitt U-förmige Führungsleisten 23 vorgesehen, in welchen Schubrahmen 24 und 30 geführt sind. Die Führungsleisten 23 sind so angeordnet, daß ihre offenen Seiten einander zugekehrt sind, so daß die seitlichen Ränder der Schubrahmen 24 und 30 in den Führungsleisten 23 aufgenommen werden können. Mit dem Schubrahmen 24 sind paarweise Förderklappen 27 und 28 gelenkig verbunden, die miteinander gekuppelt sind (nicht gezeigt). Wie in Fig. 1 gezeigt, sind die Förderklappen 27 und 28 jeweils an den Enden des Schubrahmens 24 angeordnet. Ein weiteres Paar Förderklappen 43 ist am vorderen Ende des zweiten Schubrahmens 30 gelenkig befestigt. Unter den Führungsleisten 23 für die Schubrahmen 24 und 30 sind zwei Endlosförderglieder 25 und 29 angeordnet, die beispielsweise Rollenketten sind. Diese Endlosförderglieder 25 und 29 sind über Umlenkräder (z.B. die Umlenkräder 19 und 45 für das Endlosförderglied 25) geführt und werden taktweise durch einen nicht gezeigten Antrieb in Bewegung gesetzt.

Die, bezogen auf die Förderrichtung (von rechts nach links in Fig. 1 und 2) hinteren Förderklappen 27 des Schubrahmens 24, sind mit dem Endlosförderglied 25 mit einer Verbindungsstange 26 gekuppelt. Die Förderklappen 43 sind mit dem Endlosförderglied 29 ebenfalls mit einer Verbindungsstange gekuppelt. Durch diese spezielle Ausbildung der Förderorgane (Schubrahmen 24, 30 mit Förderklappen 27, 28, 43) stellen sich die Förderklappen 27, 28, 43 beim Vorwärtshub (von rechts nach links in Fig. 1) auf, wogegen sie sich beim Rückhub flach umlegen, so daß sie unter inzwischen auf die Auflageleisten 10 und 11 aufgelegten Platten zurückbewegt werden können.

Neben dem in Förderrichtung gesehen ersten Plattenrost 7, d.h. dem Plattenrost 7, der dem ersten Palettenförderer 1 zugeordnet ist, ist über den Auflageleisten 10 und 11 ein erster Ablagerost 14 vorgesehen, auf dem die aus dem Stapel 13 durch die Vereinzelungsvorrichtung 12 vereinzelten Separatoren 15 einzeln und nacheinander abgelegt werden.

Neben dem zweiten Plattenrost 7, der neben dem Palettenförderer 2 für Paletten 22 mit Stapeln 5 aus positiven Platten 51 angeordnet ist, ist über den Auflageleisten 11 und 10 ein zweiter Ablagerost 21 vorgesehen, der zur Aufnahme von durch die Einschubvorrichtung 8 des zweiten Plattenrostes 7 eingeschobenen positiven Platten 51 (Stellung 20 in Fig. 1 und 2) und von Separatoren 16 bestimmt ist, die durch die Vereinzelungsvorrichtung 31 aus dem Stapel 17 von Separatoren entnommen worden sind. Dieser Ablagerost 21 besitzt zwei Etagen, von welchen die untere Etage für Platten 51 (Stellung 20) und die obere Etage 18 für Separatoren 16 aus dem Stapel 17 bestimmt ist.

Vom Plattenrost 7 neben dem Palettenförderer 1 werden also negative Mittelplatten 50 mit Hilfe einer Einschubvorrichtung 8 unmittelbar auf die Auflageleisten 10 und 11 geschoben, wogegen vom Plattenrost 7, der neben dem Palettenförderer 2 für Paletten 22 mit Stapeln 5 aus positiven Platten 51 angeordnet ist, die positiven Platten 51 durch seine Einschubvorrichtung 8 auf die untere Auflagefläche des Ablagerostes 21 geschoben werden.

Die Vereinzelungsvorrichtung 31 schiebt Separatoren 16 aus dem Stapel 17 auf die obere Auflagefläche 18 des Ablagerostes 21 in der Ablagestelle 46 für positive Platten 51 und Separatoren 16 bzw. 52.

Wie in Fig. 1 angedeutet, kann sich dabei unter dem Ablagerost 21 für positive Platten 51 und Separatoren 16 bzw. 52 bereits eine Plattengruppe aus einer negativen Mittelplatte 50 und einem Separator 15 (aus dem Stapel 13) bzw. 52 finden.

Wie bereits erwähnt, ist der dritte Ablagerost 42, der neben dem Palettenförderer 3 für Paletten 22 mit Stapeln 6 aus negativen Endplatten 49 angeordnet ist, in Höhenrichtung verstellbar, so daß die negativen Endplatten 49 wahlweise entweder in die mit 33 bezeichnete Stellung auf einem Ablagerost 32 oder unter eine Plattengruppe 34 eingeschoben werden können.

Es ist noch darauf hinzuweisen, daß die Ablageroste 14, 21 und 32 keine durchgehenden Platten sind, sondern von wenigstens zwei nebeneinander liegenden, horizontalen Leisten gebildet werden, damit die Förderklappen 27, 28 und 43 die auf diesen Ablagerosten 14, 18, 21 bzw. 32 liegenden Platten bzw. Separatoren von den Ablagerosten abschieben können.

Die gegebenenfalls auf den Ablagerost 32 abgelegten Endplatten 49 (Stellung 33 in Fig. 1 und 2) und die Plattengruppen 34 werden von den Förderklappen 43 von den horizontalen Auflageleisten 10 und 11 bzw. vom Ablagerost 32 auf Auflageleisten 35 einer Stapelstation 47, über der ein Magazin 48 für Zwischenlagen angeordnet sein kann, geschoben. In der Stapelstation 47 ist ein von einem Druckmittelmotor heb- und senkbarer Tisch 38 vorgesehen, auf den die Plattengruppen 34 aus der in Fig. 1 mit 36 bezeichneten Stellung durch seitliches Wegbewegen der Auflageleisten 35 abgelegt werden können. Der Stapeltisch 38 ist so gesteuert, daß er bzw. die oberste Platte eines auf ihm liegenden Stapels 37 aus Plattengruppen 34 jeweils knapp unter den seitlich zurückziehbaren Auflageleisten 35 angeordnet ist.

Die seitliche Bewegbarkeit der Auflageleisten 35 der Stapelstation 47 kann beispielsweise dadurch erreicht werden, daß diese Leisten 35 auf Rahmen montiert sind, die um unter ihnen angeordnete horizontale und zur Förderrichtung parallele Achsen mit Hilfe von einem oder mehreren Druckmittelmotoren nach außen verstellbar sind. Um die Bewegung der Auflageleisten 35 zu synchronisieren, sind mit deren Rahmen im Bereich ihrer Schwenkachsen ineinander eingreifende Zahnräder 53 vorgesehen.

In der Abstapelstation 47 ist weiters eine Fördereinrichtung 39 für einen fertigen Plattenblock 40 vorgesehen. Beispielsweise kann die Fördereinrichtung 39 aus zwei zu beiden Seiten des heb- und senkbaren Tisches 38 angeordneten Endlosförderketten oder anderen Endlosfördergliedern gebildet sein.

Es ist noch darauf hinzuweisen, daß die gesamte Vorrichtung in einem Gehäuse 41 angeordnet ist, das an eine Absaugvorrichtung angeschlossen ist.

Mit Vorteil sind auf den Paletten 22 die Stapel 4, 5 und 6 aus negativen Mittelplatten 50, positiven Platten 51 und negativen Endplatten 49 Plattenrichtgestelle vorgesehen, die ein Verrutschen der Stapel auf den Paletten 22, wenn diese von den Palettenförderbändern 1, 2 bzw. 3 bewegt werden, verhindern. Beispielsweise sind diese Plattenrichtgestelle als Blechprofile bzw. Blechplatten ausgeführt, die an den Seitenrändern der die Stapel bildenden Platten anliegen.

Die Ablageroste 14, 21 und 32 können ähnlich wie die Auflageschienen 10 und 11 aus drei horizontalen Leisten gebildet sein, in welchem Fall die Förderklappen 27, 28 bzw. 43 jeweils zwei paarweise nebeneinander angeordnete Klappen sind, die beim Abschiebevorgang zwischen jeweils zwei der horizontalen Leisten der Ablageroste eingreifen.

Die beschriebene Vorrichtung arbeitet wie folgt:

Paletten 22 mit Plattenstapeln 4, 5 bzw. 6 werden auf die entsprechenden Palettenförderer 1, 2 bzw. 3 gestellt. Die Paletten 22 werden von den Kettenförderbändern der Palettenförderer 1, 2 bzw. 3 zur Vorrichtung hinbewegt und werden automatisch angehalten, wenn die erste Reihe der Plattenstapel in Abnahmeposition gebracht worden ist. Der senkrecht angebrachte Pneumatikzylinder 55 senkt die Saugheber 56 (oder den Greifer) auf den ersten Plattenstoß ab, worauf die Saugheber 56 oder der Greifer die oberste Platte abhebt und sie etwas höher anhebt als die Höhe des Plattenrostes 7. Der waagrecht ausgerichtete Zylinder 54 verschiebt den senkrecht ausgerichteten Zylinder 55 mit der von Saughebern 56 gehaltenen Platte 50 über den Plattenrost 7 und legt die Platte 50 darauf ab (Fig. 7). Die Einschubvorrichtung 8 schiebt die Platte 50 quer zur Längsachse der Vorrichtung in die Stellung 9 auf den zentralen Auflageschienen 10, 11 mit den Förderklappen 27, 28, 43 (Längsfördereinrichtung). Sobald alle Platten 50 aus dem ersten Stapel 4 auf der Palette 22 abgenommen sind, fährt durch (nicht gezeigte) Sensoren gesteuert, die Palette 22 in die nächste Abnahmeposition. Dasselbe geschieht mit Paletten 22 mit den Plattenstapeln 5 und 6.

Die Separatorenvereinzelung geschieht mit den Vereinzelungsvorrichtungen 12, 31. Ein Separator 15 wird vom Separatorenstapel 13 (glatte Seite unten) vom Magazin auf den Separatoren-Ablagerost 14 geschoben. Die Vereinzelungsvorrichtungen 12 und 31 können wie aus der AT-B-329 124 bekannt ausgebildet sein. Für die Vereinzelung der Separatoren aus den Separatorenstapeln können am unteren Ende der die Stapel aufnehmenden Magazine Platten oder Roste vorgesehen sein, die quer verschiebbar sind und beim Verschieben mit einer bezüglich der Verschieberichtung hinten angeordneten Mitnehmerkante jeweils den untersten Separator aus dem Stapel bzw. dem Magazin herausschieben. Sobald der Separator ein Stück aus dem Magazin herausgeschoben ist, wird er von einem Gummiwalzenpaar erfaßt und zur Gänze herausgezogen und gleichzeitig auf den zugeordneten Ablagerost transportiert. Diese Konstruktion der Separatorvereinzelungsvorrichtung entspricht ungefähr der in der AT-B-381 809 beschriebenen Konstruktion.

Das Endlosförderglied 25 (umlaufende Rollenkette) ist durch die Verbindungsstange 26 über die Förderklappen 27 mit dem hin- und hergehenden Schubrahmen 24 verbunden. Auf der anderen Seite des Schubrahmens 24 ist ebenfalls eine Förderklappe 28 angebracht. Diese ist durch eine Verbindungsstange mit der Förderklappe 27 verbunden und schwenkt gleichzeitig mit dieser auf und ab. Der Schubrahmen 24 gleitet in der, über die ganze Länge der Vorrichtung durchgehenden Führungsleiste 23.

Beim Vorwärtshub legen sich die jetzt aufgestellten Förderklappen 27 gegen einen Anschlag und schieben den Schubrahmen 24 entsprechend der Länge eines Trums der Kette 25, d.h. um eine Förderteilung nach vorne. Hier angelangt, bewegt sich das Gelenk, das die Verbindungsstange 26 mit der Förderklappe 27 verbindet, über das Umlenkrad 45 nach unten. Bei der Rückwärtsbewegung der Verbindungsstege 26 legen sich die Förderklappen 27 und 28 nach rückwärts bis zu einem Anschlag um und ziehen dann den Schubrahmen 24 wieder zurück. Da die Klappenoberkanten beim Rückwärtsgang unter dem Plattenförderniveau der Auflageleisten 10 und 11 liegen, kann bereits in dieser Zeit eine neue Platte eingeschoben werden. Da die Gleitreibung des Schubrahmens 24 größer ist als die Gleitreibung der Drehbewegung der Förderklappen 27, 28, stellen sich die Förderklappen 27, 28 am hinteren Totpunkt wieder auf und ein weiterer Schubvorgang kann beginnen.

Die Vorschubvorrichtung für die Endplatte in Stellung 33 ist ähnlich aufgebaut wie oben beschrieben. Der Schubrahmen 30 ist nur mit einem Paar Förderklappen 43 ausgerüstet und der Förderhub ist kleiner. Beide Schubrahmen 24 und 30 schieben gleichzeitig. Die Geschwindigkeit des Schubrahmens 30 ist deshalb entsprechend kleiner.

Die quer zur Längsachse der Vorrichtung in die Stellung 9 eingeschobene Platte 50 und der auf den Ablagerost 14 aufgeschobene Separator 15 werden gemeinsam von den aufgestellten Förderklappen 27 unter dem Separatorenmagazin mit dem Stapel 13 zum nächsten Ablageplatz 46 gefördert.

Im Folgetakt wird eine positive Platte 51 aus der Stellung 20 mit dem darüberliegenden Separator aus der Stellung 16 auf die darunterliegende von hinten nach vorne geförderte Plattengruppe 44 gelegt. Diese Gruppe besteht jetzt aus einer negativen Mittelplatte 50, darüber der dazugehörige Separator und einer positiven Platte 51 mit darauf liegendem Separator. Ein Plattenblock (Fig. 3) besteht beispielsweise aus 2 bis 12 solcher Gruppen.

Als erste und letzte Platte liegt in jedem Plattenblock 40 eine dünnere, negative Endplatte 49 (Fig. 3). Der Ablagerost 42 liegt in einer Stellung unter dem Niveau der Auflageleisten 10 und 11. Die negative Endplatte 49 kann deshalb unterhalb der nach vorne geschobenen Plattengruppe 34 plaziert werden (erste Platte im Block).

Nach einer vorwählbaren Anzahl von geförderten Plattengruppen hebt sich der Plattenrost 42 mit einer negativen Endplatte 49 auf das Niveau des Ablagerostes 32 und die Platte 49 kann nun auf diesen in die Stellung 33 geschoben werden. Die letzte Endplatte 49 pro Block liegt nach dem von den Förderklappen 43 ausgeführten Abstreifvorgang oberhalb der Plattengruppe 34.

Die so gebildeten Plattengruppen 36 mit oder ohne negative Endplatten werden auf rückziehbare Leisten 35 der Stapelstation geschoben. Beim seitlichen Wegziehen der Leisten 35 fällt die zunächst auf diesem liegende Plattengruppe 36 auf den Sammeltisch 38 oder auf eine (oder mehrere) auf diesem bereits gesammelter Plattengruppen 37. Durch einen Oberkantenniveauregler für die Plattengruppe 37 gesteuert senkt sich der Sammeltisch 38 um die Höhe der jeweils dazugekommenen Plattengruppe 36. Dadurch bleibt die Oberkante der Plattengruppe 37 konstant.

Ist die Zahl der für den zusammenzulegenden Plattenblock 40 vorgewählten Plattengruppen 37 erreicht (mit einer negativen Platte als Abschluß) so senkt sich der Sammeltisch 38 unter das Niveau der Fördereinrichtung 39 (Kettenförderer) und der Plattenblock 40 kann durch diesen aus der Vorrichtung transportiert werden (Fig. 6). Der fertige Plattenblock 40 kann so mit einer negativen Endplatte 49 unten und oben zur weiteren Verarbeitung entnommen werden.

Wenn eine negative Endplatte am unteren Ende eines Plattenblocks 40 gebraucht wird, darf drei Takte vorher nur ein Separator in Stellung 15 und keine negative Mittelplatte in die Stellung 9 eingeschoben werden, da sonst am Sammeltisch 38 zwei negative Platten übereinanderliegen würden (negative Endplatte und negative Mittelplatte).

Bei kleinen Blöcken mit nur etwa 2 bis 5 positiven Platten können fallweise zwei Plattenblöcke 40 auf einmal übereinandergelegt werden. Dies verkürzt die nachfolgenden Produktionszeiten. In diesem Fall muß zwischen der negativen Endplatte des ersten Plattenblockes und der ersten negativen Endplatte des zweiten Plattenblockes eine Zwischenlage als Distanz eingelegt werden, um beide Blöcke zu trennen. Dies kann in der Abstapelstation 47 geschehen. Vom Zwischenlagermagazin 48 wird eine Zwischenlage auf die Endplatte des ersten Plattenblockes gelegt und darauf kommt dann die erste Plattengruppe des nächsten Blockes, beginnend mit einer negativen Endplatte. Das Zwischenlagenmagazin kann wie aus der AT-B-241 565 oder der AT-B-352 198 bekannt, ausgebildet sein.

## Patentansprüche

1. Vorrichtung zum Zusammensetzen von Platten (49, 50, 51) und Separatoren (52) zu Plattenblöcken (40) für Akkumulatoren, insbesondere für Traktions-, Industrie- und Stationärbatterien, mit einer Längsfördervorrichtung, mit Einrichtungen zum Zuführen der Platten (49, 50, 51) und Separatoren (52) aus Stapeln (4, 5, 6) zur Längsfördervorrichtung, und mit einer Stapelstation (47), gekennzeichnet durch je eine Station, in der positive Platten (51), negative Mittelplatten (50) und negative Endplatten (49) aus Stapeln (4, 5, 6) von oben entnommen und der Längsfördervorrichtung (10, 11, 24, 30) zugeführt werden, durch zwei Stationen, in welchen Separatoren (52) aus Stapeln (13, 17) durch Vereinzelungsvorrichtungen (12, 31) entnommen und der Längsfördervorrichtung (10, 11, 24, 30) zugeführt werden, wobei die Längsfördervorrichtung (10, 11, 24, 30) die Plattengruppen (44, 34) taktweise zu den einzelnen Stationen und schließlich zur Stapelstation (47) transportiert.

2. Vorrichtung nach Anspruch 1, dadurch gekennzeichnet, daß in jeder Station für Plattenstapel (4, 5, 6) aus negativen Mittelplatten (50), positiven Platten (51) und negativen Endplatten (49) eine Fördervorrichtung (1, 2, 3) vorgesehen ist, welche die vorzugsweise auf Paletten (22) angeordneten Plattenstapel (4, 5, 6) der Entnahmestelle der Einrichtungen zum Zuführen der Platten zur Längsfördervorrichtung (10, 11, 24, 30) zuführt.

3. Vorrichtung nach Anspruch 1 oder 2, dadurch gekennzeichnet, daß die Entnahmevorrichtung, die als Saugheber (56) oder Greifer ausgebildet ist, jeweils die oberste Platte (50, 51, 49) der Stapel (4, 5, 6) entnimmt und auf einen neben der Längsfördervorrichtung (10, 11, 24, 30) angeordneten Plattenrost (7, 42) ablegt.

4. Vorrichtung nach Anspruch 3, dadurch gekennzeichnet, daß jedem Plattenrost (7, 42) eine Platteneinschubvorrichtung (8) zugeordnet ist, welche die auf ihm liegende Platte (49, 50, 51) der Längsfördervorrichtung (10, 11, 24, 30) zuführt.

5. Vorrichtung nach einem der Ansprüche 2 bis 4, dadurch gekennzeichnet, daß die Längsfördervorrichtung (10, 11, 24, 30) aus wenigstens zwei, vorzugsweise drei Auflageleisten (10, 11) besteht, der taktweise in Förderrichtung bewegbare Förderklappen (27, 28 bzw. 43) zum taktweisen Vorschieben von Platten (49, 50, 51) und Separatoren (52) zugeordnet sind.

6. Vorrichtung nach Anspruch 5, dadurch gekennzeichnet, daß die Förderklappen (27, 28, 43) an im Gestell der Vorrichtung unter den Auflageleisten (10, 11) geführten Schubrahmen (24, 30) verschwenkbar befestigt sind, beim Förderhub senkrecht zur Förderrichtung stehen und beim Rückhub im wesentlichen parallel zur Förderrichtung ausgerichtet sind.

7. Vorrichtung nach Anspruch 6, dadurch gekennzeichnet, daß die Förderklappen (27, 28, 43) durch Schubstangen (26) mit Endlosfördergliedern (25, 29), die unter den Auflageleisten (10, 11) und den Schubrahmen (24, 30) angeordnet sind, gekuppelt sind.

8. Vorrichtung nach einem der Ansprüche 1 bis 7, dadurch gekennzeichnet, daß neben jedem Plattenrost (7, 42) ein Ablagerost (14, 21, 32) für Platten (49, 50, 51) und/oder Separatoren (52) vorgesehen ist.

9. Vorrichtung nach Anspruch 8, dadurch gekennzeichnet, daß der, bezogen auf die Förderrichtung in der Vorrichtung am weitesten hinten liegende, erste Ablagerost (14) zur Aufnahme von Separatoren (52) aus dem ihm zugeordneten Magazin für einen Stapel (13) aus Separatoren (52) einlagig ausgebildet und im Abstand über den Auflageleisten (10, 11) angeordnet ist, und daß der erste Plattenrost (7) in der Höhe der Auflageleisten (10, 11) angeordnet ist.

10. Vorrichtung nach Anspruch 8 oder 9, dadurch gekennzeichnet, daß der, bezogen auf die Förderrichtung zweite Ablagerost (21) eine für die Aufnahme von Separatoren (52) aus dem ihm zugeordneten Magazin für einen Stapel (17) aus Separatoren (52) bestimmte, obere Ablagefläche (18) und eine darunter angeordnete Ablagefläche für vom zweiten Plattenrost (7) zugeführte Platten aufweist, daß die untere Ablagefläche im Abstand über den Auflageleisten (10, 11) angeordnet ist, und daß der zweite Plattenrost (7) in der Höhe der unteren Auflagefläche des Ablagerostes (21) angeordnet ist.

11. Vorrichtung nach einem der Ansprüche 8 bis 10, dadurch gekennzeichnet, daß der in Förderrichtung gesehen letzte, dritte Ablagerost (32), der für die Aufnahme negativer Endplatten (49) bestimmt und einlagig ausgebildet ist, im Abstand über den Auflageleisten (10, 11) angeordnet ist und daß der ihm zugeordnete, dritte Plattenrost (42) im Maschinengestell zwischen einer oberen Endstellung, in der er in der Höhe des dritten Auflagerostes (32) angeordnet ist, und einer unteren Endstellung, in der er tiefer angeordnet ist als die Auflageleisten (10, 11), heb- und senkbar angeordnet ist.

12. Vorrichtung nach einem der Ansprüche 1 bis 11, dadurch gekennzeichnet, daß die Längsfördervorrichtung zwei seitliche Auflageleisten (11) und eine mittlere Auflageleiste (10) und jeder Ablagerost (14, 21, 32) wenigstens zwei parallel zu den Auflageleisten (10, 11) ausgerichtete Leisten aufweist und daß die Förderklappen (27, 28, 43) beim Förderhub zwischen den Auflageleisten (10, 11) bzw. den Leisten der Ablageroste (14, 21, 32) nach oben über die Leisten ragen.

13. Vorrichtung nach einem der Ansprüche 1 bis 12, dadurch gekennzeichnet, daß in der Stapelstation (47) quer zur Förderrichtung bewegbare Auflageleisten (35) für die Aufnahme einer von den am Schubrahmen (30) angeordneten Förderklappen (43) zugeführten Plattengruppe (36) vorgesehen ist und daß unter den Auflageleisten (35) ein auf und ab bewegbarer Hubtisch (38) vorgesehen ist.

14. Vorrichtung nach Anspruch 13, dadurch gekennzeichnet, daß zu beiden Seiten des Hubtisches (38) in seiner unteren Endlage ein Entnahmeförderer (39) mit Endlosfördergliedern vorgesehen ist, auf den der Hubtisch (38) auf ihm abgestapelte Plattengruppen (34, 37) als Plattenblock (40) ablegt.

## Claims

1. Apparatus for assembling plates (49, 50, 51) and separators (52) into plate blocks (40) for accumulators, especially for traction, industrial and stationary batteries, with a longitudinal conveyor device, with devices for feeding the plates (49, 50, 51) and separators (52) from stacks (4, 5, 6) to the longitudinal conveyor device, and with a slacking station (47), characterized by respective stations in which positive plates (51), negative middle plates (50) and negative end plates (49) are taken off the top of stacks (4, 5, 6) and fed to the longitudinal conveyor device (10, 11, 24, 30), by two stations in which separators (52) are taken stacks (13, 17) by single-feeding devices (12, 31) and fed to the longitudinal conveyor device (10. 11, 24, 30), wherein the longitudinal conveyor device (10, 11, 24, 30) transports the plate sets (44, 34) stepwise to the individual stations and finally to the stacking station (47).

2. Apparatus according to claim 1, characterized in that a conveyor device (1, 2, 3) is provided in each station for plate stacks (4, 5, 6) of negative middle plates (50), positive plates (51) and negative end plates (49), which devices feed the plate stacks (4, 5, 6) preferably arranged on pallets (22) to the take-off places of the devices for feeding the plates to the longitudinal conveyor device (10, 11, 24, 30).

3. Apparatus according to claim 1 or 2, characterized in that in each case the take-off device, which is in the form of a suction lifter (56) or a gripper, takes the uppermost plate (50, 51, 49) from the stack (4, 5, 6) and depositis it on a plate grid (7, 42) arranged beside the longitudinal conveyor device (10, 11, 24, 30).

4. Apparatus according to claim 3, characterized in that a plate pusher device (8) is associated with each plate grid (7, 42) and feeds the plate (49, 50, 51) lying thereon to the longitudinal conveyor device (10, 11, 24, 30).

5. Apparatus according to any of claims 2 to 4, characterized in that the longitudinal conveyor device (10, 11, 24, 30) consists of at least two and preferably three bearer rails (10, 11), with which are associated conveyor flaps (27, 28 or 43) movable stepwise in the conveyor direction for stepwise advance of plates (49, 50, 51) and separators (52).

6. Apparatus according to claim 5, characterized in that the conveyor flaps (27, 28, 43) are pivotally fixed to pusher frames (24, 30) guided in the frame of the apparatus below the bearer rails (10, 11), stand perpendicular to the conveyor direction in the feed stroke and are aligned substantially parallel to the conveyor direction in the return stroke.

7. Apparatus according to claim 6, characterized in that the conveyor flaps (27, 28, 43) are coupled by push rods (26) to endless conveyor members (25, 29), which are arranged below the bearer rails (10, 11) and the pusher frames (24, 30).

8. Apparatus according to any of claims 1 to 7. characterized in that a setting-down grid (14, 21, 32) for plates and/or separators is provided beside each plate grid (7, 42).

9. Apparatus according to claim 8, characterized in that the first setting-down grid (14) which is the farthest to the rear in relation to the conveying direction has a single level for reception of separators (52) from the associated magazine for a stack (13) of separators (52) and is arranged spaced above the bearer rails (10, 11), and in that the first plate grid (7) is arranged at the level of the bearer rails (10, 11).

10. Apparatus according to claim 8 or 9, characterized in that the second setting-down grid (21) in relation to the conveying direction comprises an upper setting-down surface (18) for reception of separators (52) from the associated magazine for a stack (17) of separators (52) and a setting-down surface arranged thereunder for plates fed from the second plate grid (7), in that the lower setting-down surface is spaced above the bearer rails (10, 11) and in that the second plate grid (7) is arranged at the level of the lower setting-down surface of the setting-down grid (21).

11. Apparatus according to any of claims 8 to 10, characterized in that the last, third setting-down grid (32) in relation to the conveying direction, which is for reception of negative end plates (49) has a single level and is arranged spaced above the hearer rails (10, 11), and in that the third plate grid (42) associated therewith is arranged in the machine frame adjustable up and down between an upper limit position, in which it is arranged at the level of the third setting-down grid (32) and a lower limit position in which it is arranged lower than the bearer rails (10, 11).

12. Apparatus according to any of claims 1 to 11, characterized in that the longitudinal conveyor device comprises two lateral bearer rails (11) and a middle bearer rail (10) and each setting-down grid (14, 21, 32) has at least two rails aligned parallel to the bearer rails (10, 11), and in that the conveyor flaps (27, 28, 43) project in the feed stroke bctween the bearer rails (10, 11) or the rails of the setting-down grids (14, 21, 32), upwardly above the rails.

13. Apparatus according to any of claims 1 to 12, characterized in that bearer rails (35) for reception of a plate set (36) fed by the conveyor flaps (43) arranged on the pusher frame (30) are provided in the stacking station (47) and are movable transvcrsely to the conveying direction, and in that a lift table (38) which can be moved up and down is provided below the bearer rails (35).

14. Apparatus according to claim 13, characterized in that a take-off conveyor (39) with endless conveyor members is provided on the two sides of the lift table (38) in its lower limit position, on which the lift table (38) deposits plate sets (34, 37) stacked thereon as a plate block (40).

## Revendications

1. Dispositif pour assembler des plaques (49, 50, 51) et des séparateurs (52) aux fins de former des ensembles de plaques (40) pour des accumulateurs, en particulier pour des batteries de traction, des batteries industrielles et des batteries stationnaires, comportant un transporteur longitudinal, des dispositifs pour amener au transporteur longitudinal les plaques (49, 50, 51) et les séparateurs (52) provenant de piles (4, 5, 6) et un poste de formation de pile (47), caractérisé par des postes dans lesquels respectivement des plaques positives (51), des plaques négatives (50) intermédiaires et des plaques négatives (49) d'extrémité sont prélevées par le haut sur des piles (4, 5, 6) et amenées au transporteur (10, 11, 24, 30) longitudinal, par deux postes dans lesquels des séparateurs (52) sont prélevés sur des piles (13, 17) par l'inrermédiaire de dispositifs de dépilage (12, 31) et amenés au transporteur (10, 11, 24, 30) longitudinal, le transporteur (10, 11, 24, 30) longitudinal transportant de manière cyclique les groupes de plaques (44, 34) vers les différents postes et finalement vers le poste de formation de pile (47).

2. Dispositif selon la revendication 1, caractérisé par le fait qu'il est prévu dans chaque poste pour des piles (4, 5, 6) de plaques négatives (50) intermédiaires, de plaque positives (51) et de plaques négatives (49) d'extrémité un dispositif de transport (1, 2, 3) qui amène les piles (4, 5, 6) de plaques, de préférence disposées sur des palettes, aux points de prélèvement des dispositifs assurant le chargement des plaques sur le transporteur (10, 11, 24, 30) longitudinal.

3. Dispositif selon la revendication 1 ou la revendication 2, caractérisé par le fait que le dispositif de prélèvement qui est agencé sous forme de dispositif de levage (56) à aspiration ou de pince aspirante prend chaque fois la plaque (50, 51, 49) supérieure de la pile (4, 5, 6) et la dépose sur une grille porte-plaque (7, 42) disposée sur le côté du transporteur (10, 11, 24, 30) longitudinal.

4. Dispositif selon la revendication 3, caractérisé par le fait qu'à chaque grille porte-plaque (7, 42) est associé un dispositif (8) de chargement de plaque qui charge sur le transporteur (10, 11, 24, 30) longitudinal la plaque (49, 50, 51) reposant sur ladite grille porte-plaque.

5. Dispositif selon l'une des revendications 2 à 4, caractérisé par le fait que le transporteur (10, 11, 24, 30) longitudinal se compose de deux, de préférence de trois rails supports (10, 11) auxquels sont associés des volets d'avancement (27, 28 et 43) qui peuvent être déplacés de manière cyclique dans la direction de transport aux fins de faire avancer de manière cyclique des plaques (49, 50, 51) et des séparateurs (52).

6. Dispositif selon la revendication 5, caractérisé par le fait que les volets d'avancement (27, 28, 43) sont fixés avec possibilité de pivotement sur un chariot (24, 30) qui est guidé dans le bâti du dispositif, sous les rails supports (10, 11), lesquels volets lors de la course d'avancement sont dressés perpendiculairement à la direction de transport et lors de la course de retour sont sensiblement parallèles à ladite direction de transport.

7. Dispositif selon la revendication 6, caractérisé par le fait que les volets d'avancement (27, 28,43) sont couplés par des biellettes (26) à des éléments transporteurs sans fin (25, 29) qui sont disposés sous les rails supports (10, 11) et les chariots (24, 30).

8. Dispositif selon l'une des revendications 1 à 7, caractérisé par le fait qu'il est prévu à côté de chaque grille porte-plaque (7, 42) une grille d'empilage (14, 21, 32) pour des plaques (49, 50, 51) et/ou des séparateurs (52).

9. Dispositif selon la revendication 8. caractérisé par le fait que la première grille d'empilage (14), la plus éloignée vers l'arrière dans le dispositif vu dans la direction de transport, comporte un étage unique pour recevoir des séparateurs (52) provenant du magasin associé pour une pile (13) de séparateurs et est disposée à distance au-dessus des rails supports (10, 11) et par le fait que la première grille porte-plaque (7) est disposée au même niveau que les rails supports (10, 11).

10. Dispositif selon la revendication 8 ou 9, caractérisé par le fait que que la deuxième grille d'empilage (21), rapporté à la direction de transport, présente une surface de pose (18) supérieure qui est destinée à recevoir des séparateurs (52) provenant du magasin associé pour une pile (17) de séparateurs et une surface de pose disposée en-dessous de la première pour des plaques provenant de la deuxième grille porte-plaque (7), par le fait que la surface de dépôt inférieure est disposée à distance au-dessus des rails supports (10, 11) et par le fait que la deuxième grille porte-plaque (7) est disposée au même niveau que la surface de pose inférieure de la grille d'empilage (21).

11. Dispositif selon l'une des revendications 8 à 10, caractérisé par le fait que la dernière grille d'empilage (32), la troisième rapporté à la direction de transport, qui est destinée à recevoir des plaques négatives (49) d'extrémité et comporte un étage unique est disposée à distance au-dessus des rails supports (10, 11) et par le fait que la troisième grille porte-plaque (42) associée est montée dans le bâti de la machine avec possibilité d'élévation et d'abaissement entre une position extrême supérieure, dans laquelle elle se trouve à la hauteur de la troisième grille d'empilage (32) et une position extrême inférieure dans laquelle elle se trouve en-dessous des rails supports (10, 11).

12. Dispositif selon l'une des revendications 1 à 11, caractérisé par le fait que le transporteur longitudinal comporte deux rails supports latéraux (11) et un rail support (10) intermédiaire et que chaque grille d'empilage (14, 21, 32) comporte au moins deux rails qui sont parallèles aux rails supports (10, 11) et par le fait que les volets d'avancement (27, 28, 43), lors de la course de transport font saillie vers le haut entre les rails supports (10, 11) ou les rails des grilles d'empilage (14, 21, 32), au-dessus desdits rails.

13. Dispositif selon l'une des revendications 1 à 12, caractérisé par le fait qu'il est prévu dans le poste de formation de piles (47) des rails supports (35) mobiles transversalement à la direction de transport qui sont destinés à recevoir un groupe de plaques (36) amené par les volets d'avancement (43) disposés sur le chariot (30) et par le fait qu'il est prévu sous les rails supports (35) une table élévatrice (38) qui peut être soulevée et abaissée.

14. Dispositif selon la revendication 13, caractérisé par le fait qu'il est prévu de part et d'autre de la table élévatrice (38) dans une position extrême inférieure de celle-ci, un transporteur de sortie (39) muni de moyens de transport sans fin sur lequel la table élévatrice (38) dépose sous forme d'ensemble de plaques (40) les groupes de plaques (34, 37) qui ont été posés sur elle.
